Europäisches Patentamt

European Patent Office

Office européen des brevets

(19)

(11) EP 1 083 752 A1

(12) **EUROPEAN PATENT APPLICATION**

(43) Date of publication:
14.03.2001 Bulletin 2001/11

(51) Int Cl.$^7$: **H04N 7/50**

(21) Application number: 99830561.9

(22) Date of filing: 08.09.1999

(84) Designated Contracting States:
**AT BE CH CY DE DK ES FI FR GB GR IE IT LI LU
MC NL PT SE**
Designated Extension States:
**AL LT LV MK RO SI**

(71) Applicant: STMicroelectronics S.r.l.
20041 Agrate Brianza (Milano) (IT)

(72) Inventors:
• **Pau, Danilo**
  **20099 Sesto San Giovanni (IT)**
• **Chimienti, Antonio**
  **10078 Veneria Reale (IT)**

(74) Representative: **Pellegri, Alberto et al**
  **c/o Società Italiana Brevetti S.p.A.
  Piazza Repubblica, 5
  21100 Varese (IT)**

(54) **Video decoder with reduced memory**

(57) The video memory requisite of a decoder of compressed video sequences comprising the steps of decompressing the coded pictures, storing the relative data in one or more buffers organized in the video memory, may be reduced by:

sub-sampling and recompressing the pictures after decompression and before storing them in respective buffers of the video memory, deriving from an L matrix representing the current picture to be compressed a sequence of sub-sampling $L_i$ and $H_i$ sub-matrices obtained by constructing two sub-matrices $L_1$ and $H_1$ of half the number of pixels of the starting matrix L, respectively by removing a progressively increased number of pixels and by interpolating the pixels of the $L_1$ matrix and successive subtraction of the corresponding pixels removed from the start matrix L and iterating this procedure using the sub-matrix $L_1$ as the starting matrix for deriving the successive matrix $L_i$ until a sub-matrix $L_n$ constituted by a single pixel is obtained, quantizing with a zero-returning quantizer said $H_i$ sub-matrices calculated from the respective $L_i$ matrix with a $Q_i$ step greater than the $Q_{i-1}$ step used for the sub-matrix $H_{i-1}$; effecting a binary tree coding of the values of said matrices using zero-tree markers for identifying a whole tree branch constituted only of zeroes, effecting a Huffman coding of the most recurrent symbols leaving uncoded the least recurrent symbols, having them preceded by an Escape symbol, according to a spatial prediction technique with variable length coding (CPLV); storing the data relative to the pictures in the form of sub-sampled, recompressed and CPLV coded blocks in respective video memory buffers; decoding the data relative to said sub-sampled and recompressed blocks of pixels; decompressing the decoded data of said blocks of pixels according to said spatial prediction technique with variable length coding (CPLV).

Figure 2

**Description**

FIELD OF THE INVENTION

In general the present invention relates to the compression and coding techniques of video image sequences and in particular to a method implementable in hardware form to reduce the memory requisite of a video decoder requiring the storing of whole images, or portions of them, during the decoding phase.

BACKGROUND OF THE INVENTION

Because of the importance acquired by the MPEG standard in the processing of digitized video sequences, a practical implementation of the method of the invention will be described as embodied in an MPEG2 compliant system, even if the method of the invention remains perfectly valid and advantageously applicable in decoders designed for different standards.

The MPEG (*Moving Pictures Experts Group*) standard defines a set of algorithms dedicated to the compression of sequences of digitized pictures. These techniques are based on the reduction of the temporal and spatial redundance of the sequence.

Reduction of spatial and statistical redundance is achieved by compressing independently the single images, by means of quantization, discrete cosine transform (DCT) and Huffman coding, while the reduction of temporal redundance is obtained using the correlation that exists between successive pictures of a sequence. Approximately, it may be said that each image can be expressed, locally, as a translation of a previous and/or subsequent image of the sequence. To this end, the MPEG standard uses three kinds of pictures, indicated with **I** (*Intra Coded Frame*), **P** (*Predicted Frame*) and **B** (*Bidirectionally Predicted Frame*).

- I (Intra coded picture) is a frame or a half-frame containing temporal redundance;

- P (Predicted-picture) is a frame or a half-frame whose temporal redundance in respect to the preceding I or P (previously co/decoded) has been removed;

- B (Biredictionally predicted-picture) is a frame or a half-frame whose temporal redundance respect to the preceding I and subsequent P (or preceding P and subsequent P) has been removed (in both cases the I and P pictures must be considered as already co/decoded).

The I pictures are coded in a fully independent mode; the P pictures are coded in respect to a preceding I or P picture in the sequence; the B pictures are coded in respect to two pictures, of I or P kind, and precisely the preceding one and the following one in the video sequence.

A typical sequence of pictures can be the following one: I B B P B B P B B I B... This is the order in which they will be viewed, but given that any P is coded in respect to the previous I or P, and any B in respect to the preceding and following I or P, it is necessary that the decoder receive the P pictures before the B pictures, and the I pictures before the P pictures. Therefore the order of transmission of the pictures will be I P B B P B B I B B...

Pictures are elaborated by the coder sequentially, in the indicated order, and subsequently reordered and displayed. To decode a B picture it is necessary for the decoder to store in a dedicated memory buffer, called "frame memory", the previously decoded I or P picture, to which a B picture refers, and this requires a relevant memory space.

For example, the European TV standard PAL contemplates a picture frequency of 25Hz. The digitized pictures are also called frames, each being constituted by a 720 x 576 pixel matrix. Using the graphic format YUV 4:2:0, which contemplates 12 bits for each pixel (8 bits for luminance and 2 bits for each of the two chrominance components), each frame needs 622,080 Bytes, and so the MPEG decoder overall requires about a 1.24MBytes frame memory.

The objective is to reduce as much as possible the memory requisite, by the use of compression algorithms. By implementing in the decoder an efficient frame compression mechanism, the goal is to achieve a memory saving of at least of 50% but which may be incremented to about 80-85% without a perceivable loss of the quality of the video sequence.

It must be considered that any error introduced in an I frame will propagate in all the successive P and B frames that have been coded with reference to the I frame, therefore it is very important that compression errors be as small as possible.

The best result that is expected with present day techniques is the use of a 12 Mbit memory and have the drawback of requiring a rather complex hardware architecture.

On the other hand, in the domain of the processing of static digital pictures at present the state of the art is represented by the GIF standard (*Graphic Interchange Format*) and JPEG (*Joint Picture Experts Group*) standard.

The proprietary GIF algorithm of Compuserve has been conceived for a *lossless* compression of synthetic pictures with a number of colours lower than or equal to 256.

The compression is said to be *lossless* when it does not imply any loss of information contained in the original data, while is said to be *lossy* when the least relevant portion of the signal is intentionally omitted.

The JPEG standard exploits also the non linearity of the human eye in order to eliminate some details in the compressed pictures, so that errors are not detectable by the user.

"Synthetic" are defined pictures that are artificially generated by the use of drawing means or the like, while "natural" pictures are of photographic kind. The first ones are characterized by abrupt chromatic gradients, while typically the second ones have more vanishing tones.

Another algorithm that is used for compressing static pictures is based upon a spatial prediction technique with variable length coding which hereinbelow will be often referred to with the acronym CPLV.

The CPLV algorithm is suitable for the compression of either *lossy* or *lossless,* natural or synthetic pictures, and has been proven itself more efficient than the GIF and JPEG algorithms because it introduces lesser amount of noise for the same compression rate.

The CPLV compression includes four basic steps:

- sub-sampling
- quantization
- binary tree coding
- Huffman coding

### Sub-sampling

Let L be the matrix representing the picture to compress. The matrix is sampled generating two sub-matrices $L_1$ and $H_1$, each one of half the pixels of L.

$L_1$ is obtained from L by removing even pixels from odd rows and odd pixels from even rows.

The elements of sub-matrix $H_1$ are obtained by interpolating the pixels of $L_1$ and subtracting the values obtained from the pixels previously eliminated from L.

In this way, the pixels of $H_1$ assume the significance of prediction errors.

Successively, two more sub-matrices $L_2$ and $H_2$ are obtained from $L_1$.

$L_2$ is obtained by eliminating the even rows of $L_1$, and $H_2$ represents again a prediction error calculated as described above.

The process is continued generating two sub-matrices, $L_{i+1}$ and $H_{i+1}$, from each $L_i$ matrix, until a matrix $L_n$ having a single pixel, and that cannot be further decomposed is obtained.

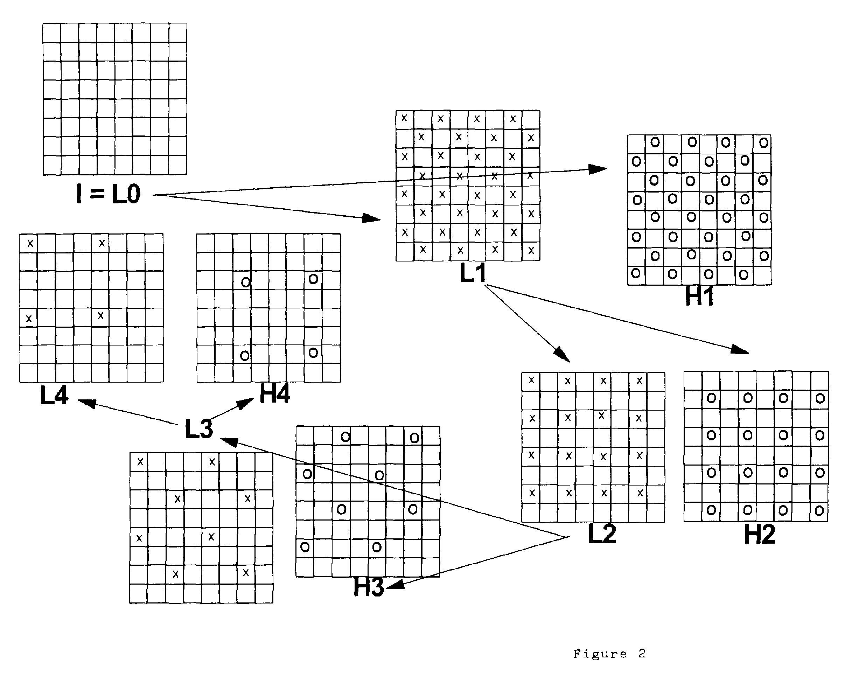

So doing, the first matrix L is converted in a sequence of matrices $L_n$, $H_{n-1}$, $H_{n-2}$, ..., $H_2$, $H_1$, as depicted in Fig. 2.

The interpolation that is done in the conversion process described above may be effected in many different ways. The methods that offer the best ratio between quality of results an computing complexity, either for natural pictures or synthetic pictures, consist in an simple arithmetic mean among four adjacent pixels (bilinear interpolation), or in an arithmetic mean between two opposite pixels with the smallest difference (linear interpolation).

### Quantization

In a decoding phase, pixels of each matrix $L_n$ and $H_n$ are used to generate pixels of the corresponding matrix $L_{n-1}$, which in turn is used together with the $H_{n-1}$ matrix to produce $H_{n-2}$ and so on. Each matrix $H_n$ contains half of the number of elements of the corresponding $H_{n-1}$ matrix, and it is used to produce all the L matrices, from $L_{n-1}$ to $L_1$. This suggests the possibility of quantizing a matrix $H_{n-1}$ with a greater value than the matrix $H_n$, because the error that is produced will affect a limited number of pixels during the decoding process.

Each matrix $H_i$ is thus quantized with a different step $Q_i$, that increases from $H_{n-1}$ to $H_1$. Each step $Q_i$ is obtained by dividing the step $Q_{i-1}$ by a scale factor smaller than one. Theoretic considerations upon the highest error that may be produced by quanti7ation, and heuristic considerations based on experimental tests, show that for low compression rates the best scale factor is higher than for higher compression rates.

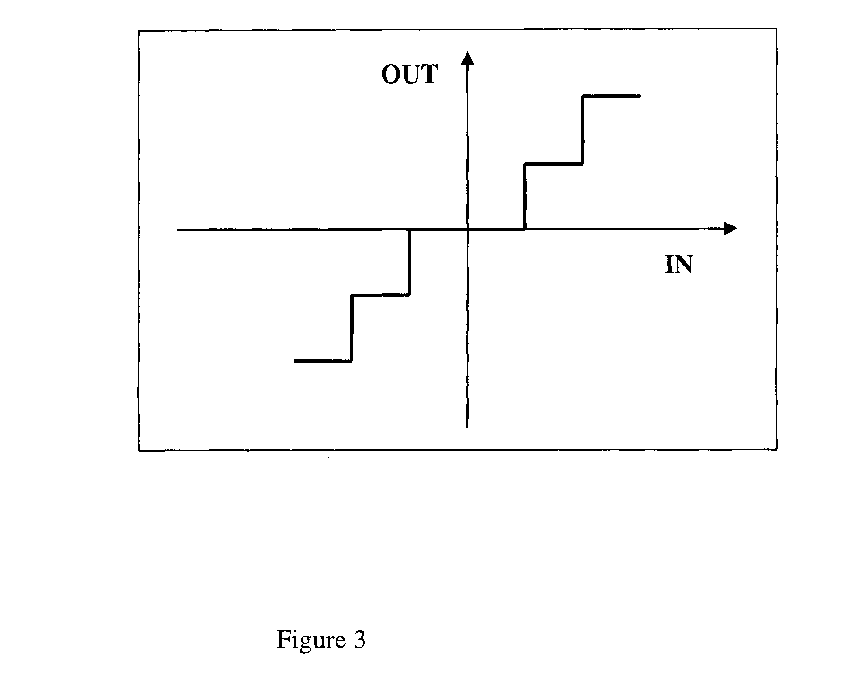

The simple algorithm of quantization is conceived in order to have a "dead zone" in the transfer function from input and output, as depicted in Fig. 3, i.e. a zone in which input values produce always a zero output (zero-returning quantizer). The production of zero values is favoured because it is particularly useful in tree coding, as will be described in the following paragraph.

It is worth noting that quantization causes, clearly, a *lossy* compression, but it remains an optional step. If a *lossless* compression of a picture is desired, it is necessary and sufficient to avoid quantization of the matrices H.

### *Binary tree coding*

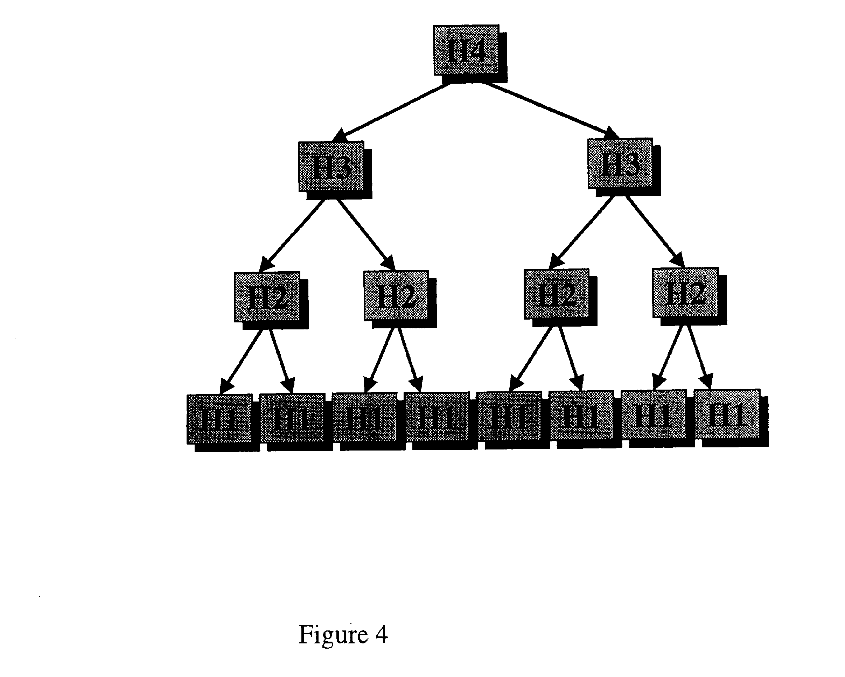

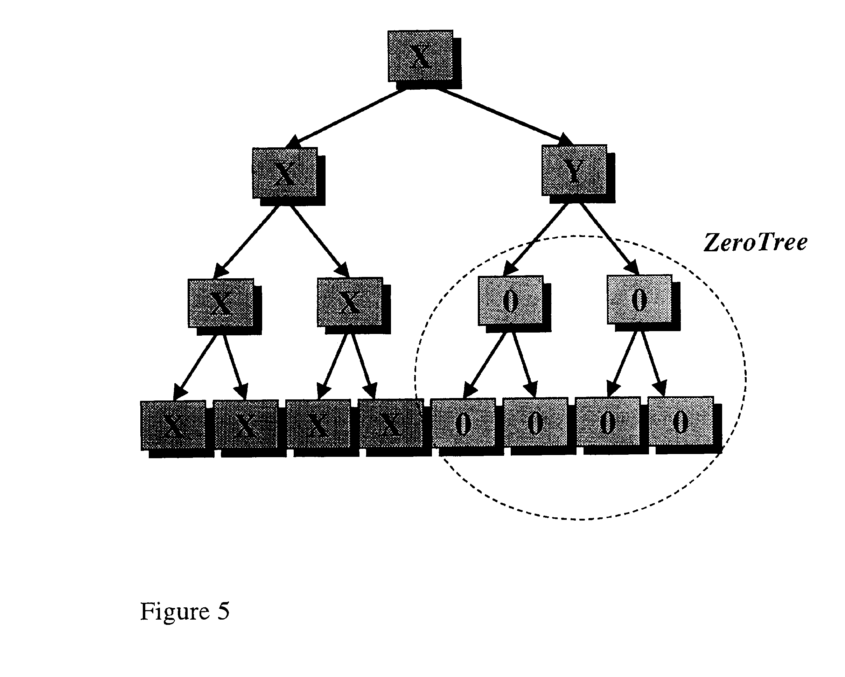

The values of the $H_j$ matrices can be organized in a binary tree structure, in which each pixel of a $H_n$ matrix is tied to two pixels of $H_{n-1}$ as shown in Fig. 4. Such a data organization procures an important advantage: by using appropriate markers, a whole "branch" of the tree, constituted only of zeroes, can be substituted with a particular value (conventionally called "zero tree"), thus avoiding long sequences of zeroes in the bitstream, as shown in Fig. 5. Sequences of zeroes would otherwise be rather frequent, in view of the fact that the II values are prediction errors, and so they are typically close or equal to zero. In that way it is possible to achieve a remarkable reduction on the size of the compressed picture, without introducing any coding error.

It is evident that the binary tree coding derives a great advantage from quantization. The more the H values are quantized, the more probable it is that they become zero, thus making more frequent the singling out of whole branches of the binary tree that can be eliminated by the use of the "zero tree" marker.

### *Huffman coding*

After quantization and tree coding, the bitstream is subjected to Huffman coding, a process aimed to maximize the entropy of the data flow by substituting each symbol with a code of variable length, the shorter as the greater is the frequency of the symbol that it substitutes. It has been demonstrated heuristically that for the established goals it is not necessary to calculate a Huffman code for each possible symbol; less probable symbols may not be coded, and have them preceded by a particular Escape symbol, for informing the decoder that the successive symbol is not a Huffman code.

### Peculiarities of the MPEG coding

The European TV standard PAL, as well as the American NTSC, contemplate that pictures (or frames) of video sequences be constituted by two independent and interlaced half-pictures (called fields). This means that even rows of each frame belong to a field, and odd rows to another field. In the MPEG standard, each frame is composed of a luminance matrix (Y) and of two chrominance matrices (IJ and V). In the 4:2:0 video format, each chrominance matrix has halved dimensions as compared to the luminance matrix.

STMicroelectronics has developed a version of the MPEG2 audio/video decoder for PAL and NTSC applications. The integrated device includes an MPEG2 video decoder and an MPEG1 audio decoder. Both cores access a 16 Mbits external DRAM via a common interface. The audio core accesses 131,072 bits only, while the video core accesses the remaining 16,646,144 bits of the DRAM.

The video memory is organized as follows:

- **bit buffer:** the compressed data buffer that the MPEG standard fixes in 1.75 Mbits + an extra quantity to account for the non ideality of the implemented decompression process (835,584 bits).

- **I-frame buffer:** for the I-picture (Intra-picture) decompressed in 4:2:0 format;

- **P-frame buffer:** for the P-picture (Predicted picture) decompressed in 4:2:0 format;

- **B-frame buffer:** for the B-picture (Bidirectionally predicted picture) decompressed in 4:2:0 format, the size of which has been optimized by a factor of 0.7407 and 0.6111. The presence of this buffer is also to account for the non ideality of the decoding process.

Each frame buffer in the 4:2:0 format occupies the following memory space:

PAL standard      720 x 576 x 8 for the luminance (Y)      =      3,317,760 bits

360 x 288 x 8 for the U chrominance      =      829,440 bits

360 x 288 x 8 for the V chrominance      =      829,440 bits

------------------

total  Y + U + V =      4,976,640 bits

NTSC standard    720 x 480 x 8 for the luminance (Y)      =      2,764,800 bits

360 x 240 x 8 for the U chrominance      =      691,200 bits

360 x 240 x 8 for the V chrominance      =      691,200 bits

------------------

total  Y + U + V =      4,147,200 bits

Thus the total, in the PAL case which is the heaviest, is:

$$1,835,008+835,584+4,976,640+4,976,640+(4,976,640*0,7407)=16,310,070 \text{ bits}$$

This calculation takes into account the optimization by 0.7407 factor of B frame buffer.

A further optimization of this device consists in executing the decompression of B pictures on-the fly without the need of storing them; by the use of fast memories such as synchronous 100 MHz and higher frequency SDRAM. Such an optimization will further lower the video memory requisite to:

$$1,835,008+835,584+4,976,640+4.976,640=12,623,872 \text{ bits}$$

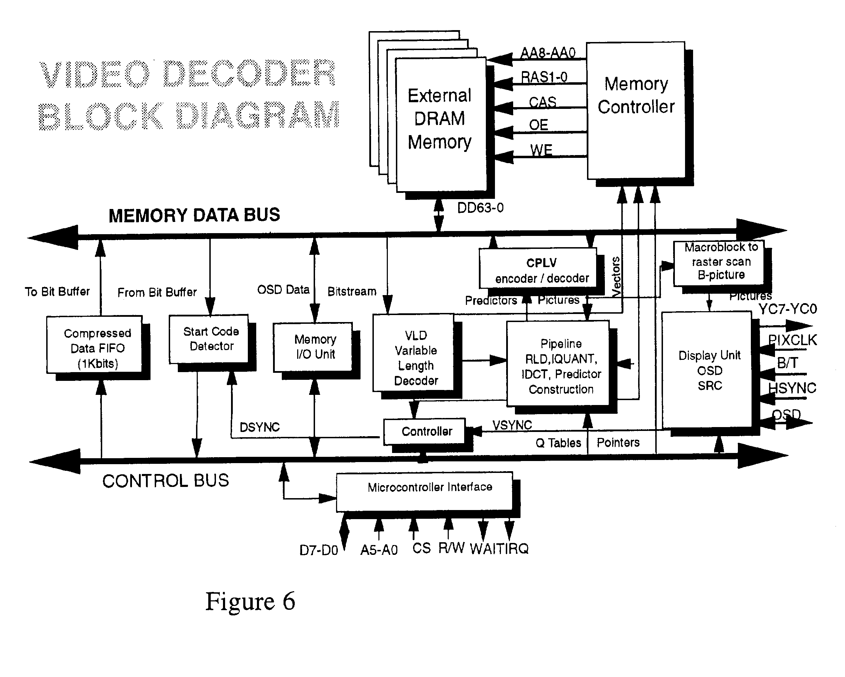

the B buffer is on chip, being so requested for converting the scan of each 8x8 block, defined in the MPEG-2 compressed stream, in that of each row of the picture (field or frame) required by the display process of the picture itself. Such a macrocell depicted in Fig. 6, is designated as "Macroblock to raster scan converter".

OBJECT AND SUMMARY OF THE INVENTION

Object of the present invention is to provide a method for reducing the video memory requisite of decoders of compressed video picture sequences, implying a slight loss of quality of reconstructed pictures but wherein picture degradation is undetectable to the observation of the image reproduced on the TV screen because the introduced artifacts are preminently distributed at relatively high frequencies.

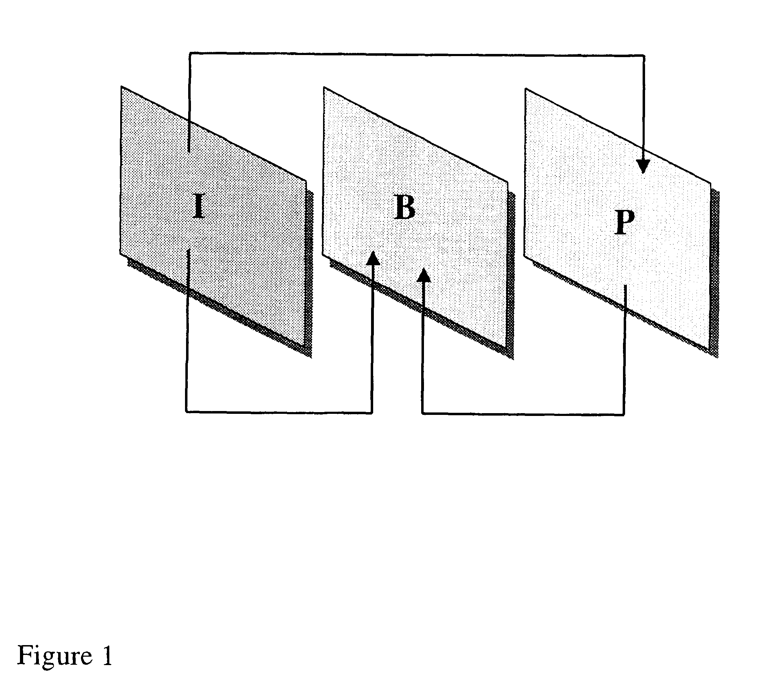

The concept on which present invention rests is the recognition stemming from the above calculations that the size of the memory required by the decoding process may be significantly reduced if a recompression is admitted of the pictures utilized as reference for the prediction (the I and P pictures in the case of the MPEG-2 standard as depicted in Fig. 1), after decompression but before they are stored in the external memory. Afterwards, such pictures will be decompressed at the time they are read from the memory.

In order to be effective while introducing tolerable artifacts, such a recompression should satisfy the following requisites:

•    the amount of memory space occupied by the compressed pictures plus the space utilized for their compression must be lower than the total memory space required in decoders which do not use such a recompression;

- the picture recompression must be realized with a method that can be easily implemented so that the cost of the device will not be affected in a relevant manner compared to the saving deriving from reducing the memory requisite;

- the loss of quality of the reconstructed pictures must be imperceivable.

It has been found that a CPLV compression method offers an outstanding flexibility in decoding video sequences allowing an extremely easy adaptation of the coding and decoding circuits optimizing their characteristics of operation for variable compression levels.

The method of the invention to reduce the video memory requisite of a decoder of compressed video sequences comprising the steps of decompressing the coded pictures, storing the relative data in one or more buffers organized in the video memory, consists in

sub-sampling and recompressing the pictures after decompression and before storing them in respective buffers of the video memory, deriving from an L matrix representing the current picture to be compressed a sequence of subsampling $L_i$ and $H_i$ sub-matrices obtained by constructing two sub-matrices $L_1$ and $H_1$ of half the number of pixels of the starting matrix L, respectively by removing a progressively increased number of pixels and by interpolating the pixels of the $L_1$ matrix and successive subtraction of the corresponding pixels removed from the start matrix L and iterating this procedure using the sub-matrix $L_1$ as the starting matrix for deriving the successive matrix $L_i$ until a sub-matrix $L_n$ constituted by a single pixel is obtained,

quantizing with a zero-returning quantizer said $H_i$ sub-matrices calculated from the respective $L_i$ matrix with a $Q_i$ step greater than the $Q_{i-1}$ step used for the sub-matrix $H_{i-1}$;

effecting a binary tree coding of the values of said matrices using zero-tree markers for identifying a whole tree branch constituted only of zeroes,

effecting a Huffman coding of the most recurrent symbols leaving uncoded the least recurrent symbols, having them preceded by an Escape symbol, according to a spatial prediction technique with variable length coding (CPLV);

storing the data relative to the pictures in the form of sub-sampled, recompressed and CPLV coded blocks in respective video memory buffers;

decoding the data relative to said sub-sampled and recompressed blocks of pixels;

decompressing the decoded data of said blocks of pixels according to said spatial prediction technique with variable length coding (CPLV).

The selected pixels of the matrices L and $L_i$ can be either the even pixels of even rows and odd pixels of odd rows being "i" odd or the odd pixels of the odd rows on $L_i$ being "i" even, counting only the rows and columns relatives to pixels placed on $L_{i-1}$.

The method of the invention can be implemented in hardware form by including in a video decoder:

a circuit of recompression and coding (CPLV Encoder) according to a spatial prediction technique with variable length coding of picture data to be written in respective video memory buffers and a circuit of decoding and decompressing (CPLV Decoder) said picture data read from said video memory buffers and generating a stream of decompressed data.

The compression and coding circuit (CPLV Encoder) may be composed of

a frame storage memory (Frame Memory) storing the CPLV coded frame;

a work memory (Work Ram) for storing an uncoded macrohlock and a circuit (Get Macroblock) transferring sequentially the decompressed macroblocks produced by said decoder in the work memory;

a sub-sampling and quantizing circuit of blocks of data of the macroblock stored in the work memory coupled in cascade thereto and fedback to the work memory by a quantizer (Quantizer) having a variable step of quantization, comprising a circuit (Get Block) sequentially processing blocks of data of said macroblock and first multiplexing mean enabling/disabling circuits calculating said coefficients $H_i$ when "i" is even (Interp Even) and when "i" is odd (Interp Odd) coupled by second multiplexing mean to said quantizer;

a circuit (Zero Tree) sequentially performing a binary tree coding and a zero tree marking on sub-sampled and quantized blocks of data stored in the work memory;

a Huffman coder coupled in cascade to said circuit (Zero Tree) coding the binary tree coded blocks of data and transferring the coded blocks in said frame storage memory (Frame Memory);

means for regulating the step of quantization of said quantizer, comprising a circuit (Compute Quant) calculating the best quantization step from data output by a circuit (Compute Length) calculating the bit length of each Huffman coded macroblock;

calculating and storing means of start addresses of the compressed macroblocks in the frame storage memory, comprising a circuit (Compute Addr) calculating from the bit length, output by said circuit (Compute Length) calculating the bit length, of each Huffman coded macroblock the start address of the successive macroblock in the frame storage memory and a memory (Address Table) storing the start addresses of all the macroblocks stored in the frame memory;

a data bus (External Bus) to which said Huffman coder, said decompressed macroblocks transfer circuit (Get Macroblock) and said frame storage memory (Frame Memory) are coupled.

BRIEF DESCRIPTION OF THE DRAWINGS

**Figure 1** summarizes schematically the relationship among the I, B and P frames in a MPEG sequence.
**Figure 2** illustrates the decomposition of the original picture in the CPLV encoder.
**Figure 3** depicts the quantizer transfer function.
**Figure 4** shows how the binary tree is built.
**Figure 5** shows the use of the "zero-tree" marker in the binary tree coding.
**Figure 6** is a block diagram of an MPEG video decoder MP@ML containing a CPLV encoder and a CPLV decoder according to the present invention.
**Figure 7** illustrates the use of the CPLV coding and decoding and frame memory within the MPEG decoder.
**Figure 8** is a scheme of the CPLV coding routine.
**Figure 9** is a detailed flow chart of the CPLV coding.
**Figure 10** is a general architectural scheme of the CPLV coder.
**Figure 11** is a scheme of the CPLV decoding.
**Figure 12** is a detailed flow chart of the CPLV decoding.
**Figure 13** is a general architectural scheme of the CPLV decoder.

DESCRIPTION OF AN EMBODIMENT OF THE INVENTION

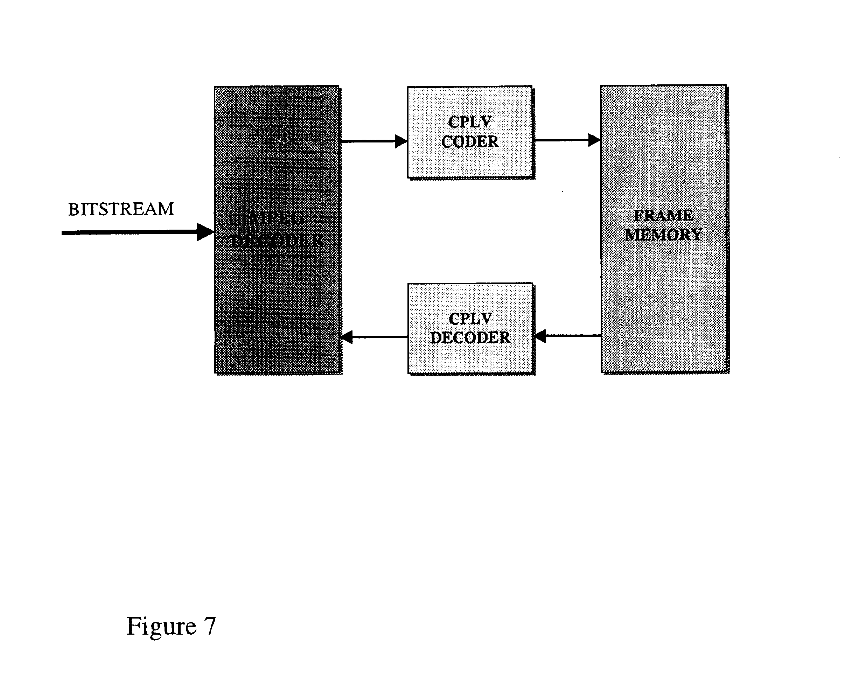

Motion compensation operates locally, by subdividing each frame in areas called macroblocks, each of them is composed of four luminance blocks and two chrominance blocks (in the chroma format 4:2:0), where a block is a square area of eight pixels per side.
To reconstruct a B frame from macroblocks of I and P frames is thus necessary to access independently different blocks of the pictures, therefore the CPLV recompression algorithm does not operate on a whole picture but on the single constituting blocks.
Once the I or P frame has been decoded according to the MPEG standard, the CPLV recompression coder operates sequentially on all the frame blocks, compressing them separately, according to the CPLV algorithm, as described above.
The CPLV coder receives as parameter the desired compression rate, and codes each block with a different quantization step, trying to stay close to the ideal bitrate by virtue of a feed-back mechanism, that determines the quantization step of each block on the basis of the number of bit so far requested by the preceding blocks. The information on the quantization step is introduced in the bitstream of each block, whose address in the frame memory is stored in an address table, in order to allow random access. The table contains as many locations as the number of blocks that compose a picture of either I or P kind.
Every time the MPEG decoder require a block belonging to a frame stored in the frame memory, the address of the block is extracted from the address table, the block is read from memory, decoded, and finally used, through motion compensation, to produce the corresponding block of a P or a B frame.
The structure of the CPLV coder and decoder will be described by referring to the diagrams of Figs. 6 and 7.

**Recompressing CPLV coder**

*Functions*

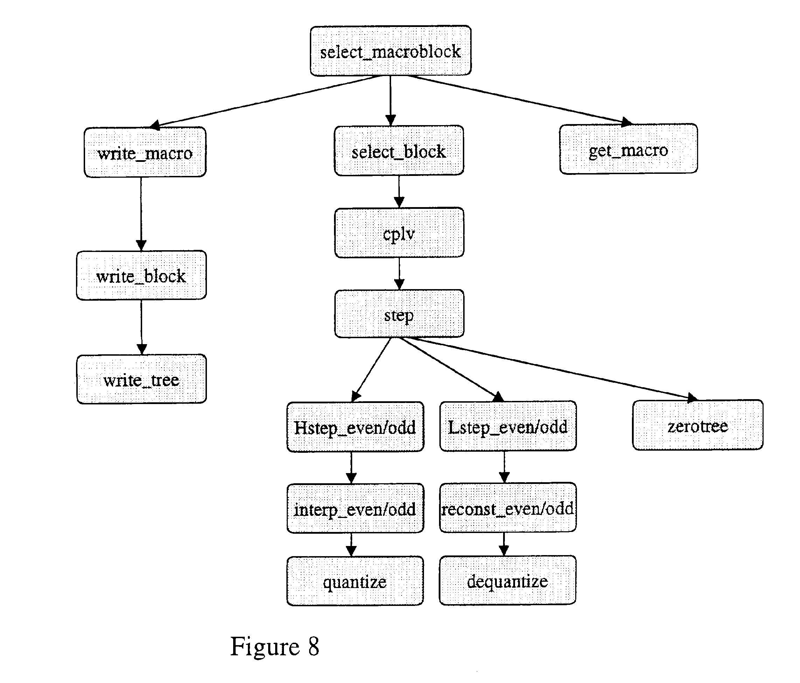

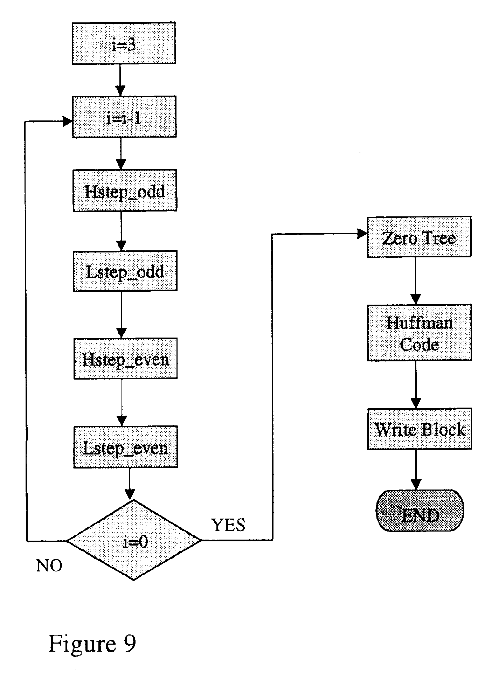

The main coding routine consists in the function *select_macroblock(),* which applies the CPLV to all the macroblocks of a picture, sub-sampling, quantizing, and subjecting them to binary tree coding and Huffman coding.
A scheme of the various steps of the coding routine is shown in Fig. 8, while Fig. 9 shows a simplified flow chart.

select_macroblock

This function provides to scan the memory in which the I or P frame, decoded by the MPEG decoder is stored. It proceeds in raster-scan order, i.e. from left to right and from top to bottom, for each of the three chromatic components, transferring each macroblock in a work memory *(get_macro()* function), from where it is processed by the CPLV coder. Successively the macroblock is written in the work memory, by means of the *write_macro()* function.

The function attends also to the updating of the quantization step depending on the difference between the expected length of the coded picture and the actual length.

```
function select_macroblock()

{

    while (i<total_macroblocks)

    {

        get_macro(i);

        select_block();

        write_macro();

    }

    if (total_length<expected_length)

        decrease_quant;

    else if (total_length>expected_length)

        increase_quant;

}
```

get_macro

This function attends to the transfer of the macroblocks from the main memory, which contains the whole picture (frame), to a relatively small work memory, where macroblocks are elaborated, one at the time, by the CPLV coder.

```
function get_macro(x)

    {

        work_memory_Y=main_memory_Y[x];

        work_memory_U=main_memory_U[x];

        work_memory_V=main_memory_V[x];

    }
```

select_block

This function operates on the macroblocks stored in the work memory, by applying to each macroblock the CPLV algorithm. The blocks to be elaborated are 6:4 for luminance (Y component) and 2 for chrominance (U and V components).

```
        {

            for (block=0 to 5)

                CPLV(block);

        }
```

CPLV

As already said, the CPLV algorithm decomposes the starting matrix in a series of sub-matrices $I_{i}$: because the procedure of making such sub-matrices is different depending whether the i index is even or odd, the algorithm has been split in two portions called *step_even()* and *step_odd():* each of these two functions attends to sub-sampling and quantization.
Successively, the "CPLV" block performs a binary tree coding by introducing the Zero Tree marker.

```
function CPLV()

{

    for (i=steps-1 to 0)

        step(i);

    zerotree();

}

function step(i)

{

    Hstep_odd(i);

    Lstep_odd(i);

    Hstep_even(i);

    Lstep_even(i);

}
```

It is important to notice that, in decoding, the CPLV decoder will dispose only of the quantized values of $H_i$ matrices, and not of the original values obtained by the coder before the quantization. This would cause an error, which nevertheless can he avoided, by having also the coder to operate with quantized values. That is, each time a $H_i$ matrix is generated, the corresponding $L_{i-1}$ matrix is reconstructed from the quantized values of $H_i$, exactly as the decoder would do. For that reason, the function *step()* includes the two functions *Lstep_odd()* and *Lstep_even(),* which are proper of the decoder and attend to the reconstruction of L matrices. For the same reason, the processing cycle in the *CPLV()* function proceeds inversely, from the last to the first step, instead of from the first to the last step.

```
function Hstep_odd(s)

{

    for (y=0 to n step s1)

    for (x=0 to n step s2)

        interp_odd(y,x);

}
```

The *Hstep_even()* and *Hstep_odd()* functions scan the work matrix, calculating new pixels values for each level $H_i$.

```
function interp_odd(y,x)

{

        d1s=pixel[ym,xm];

        d1i=pixel[yp,xp];

        d2s=pixel[ym,xp];

        d2i=pixel[yp,xm];

        if ( abs(d1s-d1i) < abs(d2s-d2i) )

            pixel[y,x]=quantize( (d1s+d1i)/2-pixel[y,x] );

        else

            pixel[y,x]=quantize( (d2s+d2i)/2-pixel[y,x] );

    }
```

For the interpolation, two adjacent pixels with the least absolute difference are chosen. After interpolation, the quantization is performed by way of a division between integers:

```
                function quantize(x)


                        {

                            return (x/q);

                        }
```

The pseudocode for *Lstep_odd()* is very similar:

```
function Lstep_odd(s)

{

    for (y=0 to n step s1)

    for (x=0 to n step s2)

        recostr_odd(y,x);

}

function recostr_odd(y,x)

{

        d1s=pixel[ym,xm];

        d1i=pixel[yp,xp];

        d2s=pixel[ym,xp];

        d2i=pixel[yp,xm];

        if ( abs(d1s-d1i) < abs(d2s-d2i) )

            pixel[y,x]=(d1s+d1i)/2-dequantize(pixel[y,x]);

        else

            pixel[y,x]=(d2s+d2i)/2-dequantize(pixel[y,x]);

}
```

The dequantization function uses an expedient to minimize the error, by taking the median value in the step of the transfer function.

```
function dequantize(int x)

{

    if (x>0)

        result=x*q+(q-1)/2;

    else if (x<0)

        result=x*q-(q-1)/2;

    else

        result=0;

    return(result);

}
```

zerotree

The recursive function *zerotree()* scans the binary tree and "prunes" it by inserting "Zero Tree" markers to eliminate branches constituted only by zero values. It is worth noticing that the tree structure is not built expressly: indeed there is an easy rule which allows, given the position of a node of the tree in the work memory, to derive the actual position of the two child branches inside the same matrix. Such a rule is represented hereinbelow by the function *child()*.

```
function zerotree(pixel,step)

{

    child1=child(pixel,1);

    child2=child(pixel,2)

    zerotree(child1,step-1);
```

```
            zerotree(child2,step-1);

            if (child1==0 AND child2==0)

            {

            pixel=ZeroTree;

            return;

            }

    }
```

write_macro

This function attends to write the macroblock in binary form, using the Huffman codes. For each macroblock, the value of the used quantization step is written, followed by binary codes of the elements. Moreover, the address of the macroblock is written in a suitable table, which will be used by the decoder to allow random access to the frame memory.

```
            function write_macro(n)

            {

                write(q);

                addr_table[n]=address;

                for (i=0 to 5)

                write_block(i);

            }
```

write_block

To write a block, first of all it is necessary to write the value of the pixel in [0,0] position because this does not belong to the binary tree. Afterwards nodes of the binary tree are written by means of a recursive function, similar to the *zerotree()* function already examined above. Naturally it is not written the effective value of the pixel, but his Huffman symbol.

```
        function write_block()

        {

            write(pixel[0,0]);

            write_tree(tree_root);

        }

        function write_tree(pixel)

        {

            hsymbol=Huffman(pixel);

            write(hsymbol);

            child1=child(pixel,1);

            child2=child(pixel,2);

            write_tree(child1);

            write_tree(child2);

        }
```

### *Architecture*

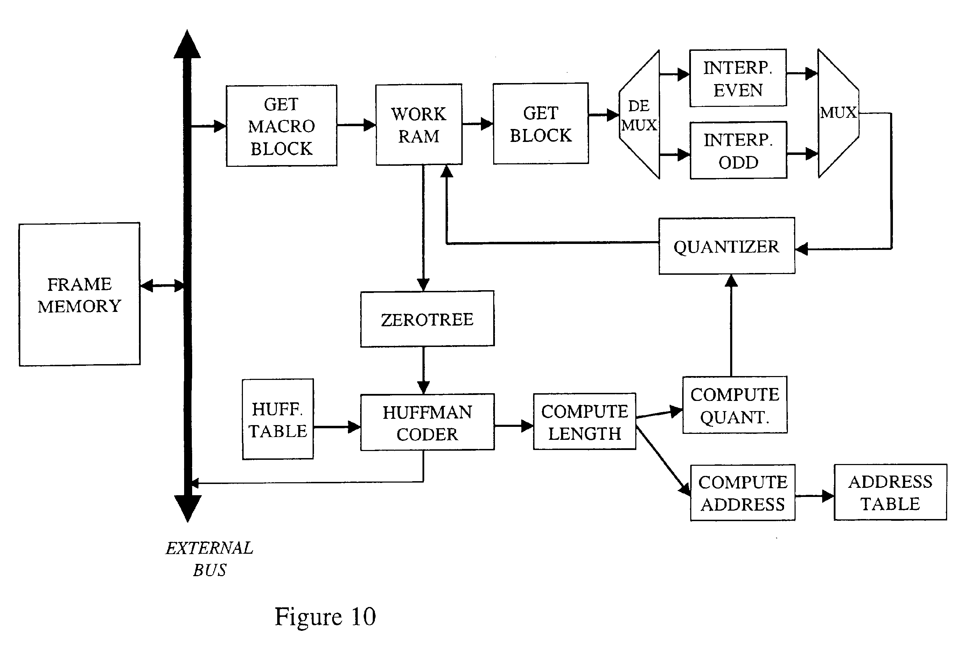

Fig. 10 shows a general architectural diagram of the coder, composed of the following functional blocks:

- ■   Get Macroblock attends to take sequentially macroblocks from the external memory, and to store them in the internal work memory of the coder.

- ■   Work Ram is a work memory, of a size suitable to contain an uncoded macroblock, constituted of 6 blocks each of them being a 8x8 pixel matrix, each pixel being coded with 8 bits.

- ■   Get Block attends to process sequentially the 6 blocks constituting a macroblock. The blocks are taken from the Work Ram one after the other, and subjected to CPLV coding.

- ■   Demux a demultiplexer that submits pixels of each block alternatively to an even coding step and to an odd coding step, determining the values of matrices $H_i$.

- ■   Inter Even calculates the coefficient $H_i$, when i is even.

- ■   Interp Odd calculates the coefficient $H_i$, when i is odd.

- ■   Quantizer quantizes the $H_i$ values with a quantization step Q.

■ <u>Zero Tree,</u> when the whole block has been quantized, effects the binary tree coding, eliminating the zero branches by replacing them with "ZeroTree" markers.

■ <u>Huffman Coder,</u> submits the coefficients to Huffman coding.

■ <u>Huffman Table</u> is the memory storing the calculated Huffman codes.

■ <u>Frame Memory</u> is the frame memory of the MPEG decoder.

■ <u>Compute Length</u> calculates the bit length of each macroblock.

■ <u>Compute Quant,</u> depending on the length of the coded macroblock, calculates the quantization step for the successive macroblock.

■ <u>Compute Addr,</u> depending on the length of the coded macroblock, calculates the start address of the successive macroblock in the Frame Memory.

■ <u>Address Table</u> contains the start address of all the macroblocks stored in the Frame Memory.

**CPLV decoder**

*Functions*

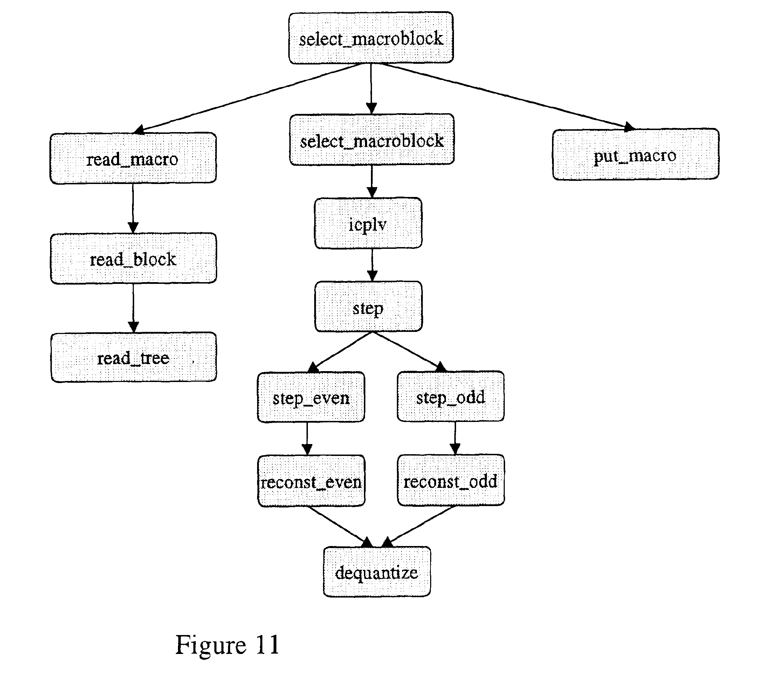

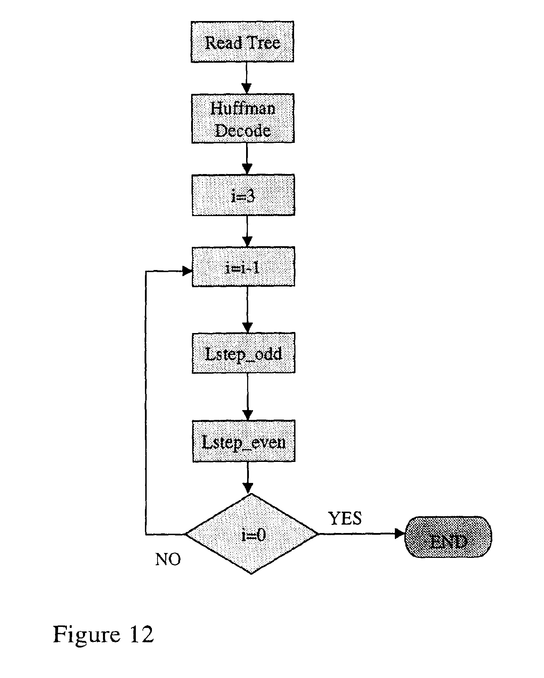

The CPLV decoder functions in a specular manner in respect to the coder, from which it inherites most of the functions.
A scheme of the functions of the decoding routine is depicted in Fig. 11. A simplified flow chart of the routine is shown in Fig. 12.

select_macroblock

This function constitutes the main decoding cycle. The address of each macroblock is taken from the address table addr_table, and provided to the *get_macro()* block, which stores the coded stream in a work memory, where afterwards it will be elaborated. The *write_macro()* function writes the macroblock in an external memory.

```
function select_macroblock()

{

    while (i<total_macroblocks)

    {

        addr=addr_table[i];

        read_macro(addr);

        select_block();

        put_macro(i);

    }

}
```

read_macro

This function reads a macroblock from the frame memory, and writes it in a work memory after having executed the Huffman decoding. Firstly, the quantization step is read and stored, and successively all 6 blocks are read in sequence.

```
function read_macro(addr)

{

    Q=read_quant(addr);

    for (i=0 to 5)

        read_block();

}
```

read_block

This function attends to the reading of a block from the frame memory. The first value is read, corresponding to the pixel [0,0], not belonging to the binary tree and thus it is not coded. Afterwards, the recursive function *read_tree ()* reads the binary tree of the block.

```
function read_block()

{

    pixel[0,0]=read_code;

    read_tree(tree_root);

}
```

read_tree

The function *read_tree()* reads recursively the binary tree, decoding the Huffman symbols. When a Zero_Tree marker is met, the reading is stopped, automatically placing equal to zero a whole branch of the tree.

```
function read_tree(pixel)

{

    hsymbol=read();

    pixel=DeHuffman(hsymbol);

    if (pixel=Zero_Tree)

        return;

    child1=child(pixel,1);

    child2=child(pixel,2);

    read_tree(child1);

    read_tree(child2);

}
```

select_block

When the macroblock has been read from the frame memory and stored in the work memory, the inverse CPLV algorithm is performed on the various blocks.

```
function select_block()

{

    for (block=0 to 5)

        iCPLV(block);

}
```

iCPLV

The functions of CPLV decoding are almost equal to the coding functions, therefore only the pseudocode thereof is reported.

```
function iCPLV()

{

    for (i=steps-1 to 0)

        step(i);

}

function step(i)

{

    step_odd(i);

    step_even(i);

}

function step_even(s)

{

    for (y=0 to n step s1)

    for (x=0 to n step s2)

        recostr_even(y,x);

}

function recostr_even(y,x)

{

        d1s=pixel[ym,x];

        d1d=pixel[yp,x];

        d2s=pixel[y,xm];

        d2d=pixel[y,xp];
```

```
if ( abs(d1s-d1d) < abs(d2s-d2d) )

    pixel[y,x]=(d1s+d1d)>>1-dequantize(pixel[y,x]);

  else

    pixel[y,x]=(d2s+d2d)>>1-dequantize(pixel[y,x]);

}

function dequantize(x)

{

  if (x>0)

    result=x*q+(q-1)/2;

  else if (x<0)

    result=x*q-(q-1)/2;

  else

    result=0;

  return(result);

}
```

put_macro

When the macroblock has been decoded, it is written in the external memory.

```
function put_macro(x)

{

    main_memory_Y[x]=work_memory_Y;

    main_memory_U[x]=work_memory_U;

    main_memory_V[x]=work_memory_V;


}
```

*Architecture*

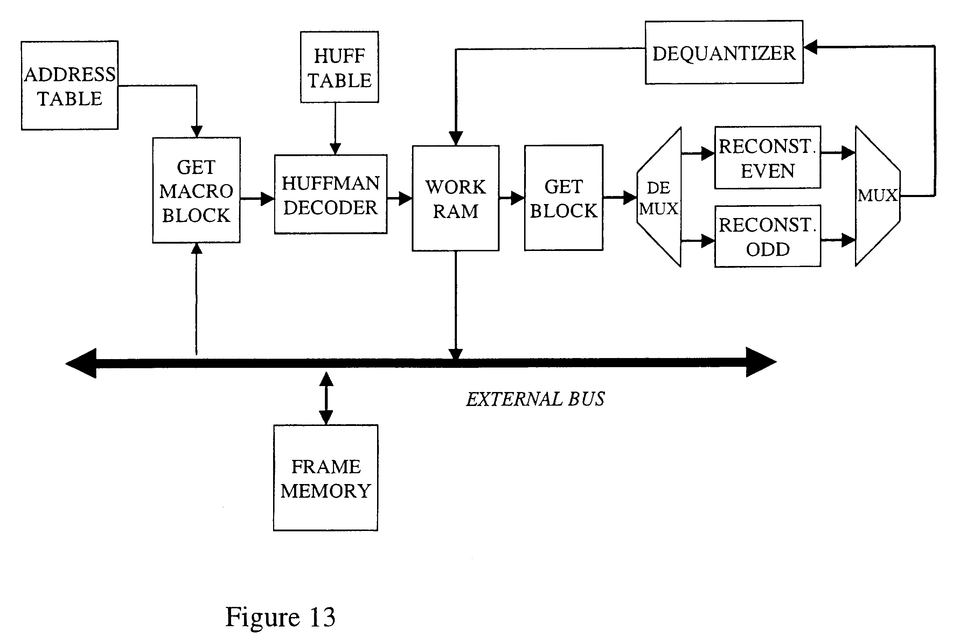

Fig. 13 shows a general architectural diagram of the decoder, composed of the following functional blocks:

■ <u>Frame Memory</u> is the frame memory that stores the CPLV coded picture.

■ <u>Address Table</u> is the table containing the address of each macroblock stored in the Frame Memory.

■ <u>Get Macroblock</u> attends to take sequentially compressed macroblocks from the frame memory and to store them in the work memory of the decoder.

■ <u>Huffman Decoder</u> performs the Huffman decoding of each macroblock.

■ <u>Huffman Table</u> is the memory storing the calculated Huffman codes.

■ <u>Work Ram</u> is a work memory of a size suitable to contain an uncoded macroblock, composed of 6 blocks, each being an 8x8 pixel matrix.

■ <u>Get Block</u> processes sequentially the 6 coded blocks constituting a compressed macroblock.

■ <u>Reconstr Even</u> reconstructs the coefficients $L_i$, when i is even.

■ <u>Reconstr Odd</u> reconstructs the coefficients $L_i$, when i is odd.

■ <u>Dequantizer</u> dequantizes with a Q step.

**Example of compression with N bits per pixel:**

Let I be a digital picture represented as a M rows and N columns matrix of pixels, and let I(y, x) be the pixel at the row y and at the column x, represented as an integer by a number D of bits (binary digits).
Let the picture I be subdivided in rectangular blocks having BxC dimensions (B rows and C columns). The maximum compression effectiveness is obtained if B and C are chosen among the integer dividers of N.
Let us consider a BxC=8*8 block of pixels after the eventual motion compensation. Let us suppose to compress each block one independently from the other, whether the block is a luminance or a chrominance block.
Each macroblock is constituted of four 8*8 luminance blocks and of two 8*8 chrominance blocks; each macroblock is coded with a number of bits equal to:

$$(4 * 8 * 8 * 8) + (2 * 8 * 8 * 8) = 3{,}072 \text{ bits}$$

$$\underbrace{\qquad\qquad}_{\text{luma}} \qquad \underbrace{\qquad\qquad}_{\text{chroma}}$$

In each PAL frame there are 1620 macroblocks (in NTSC 1350):

$$3{,}072 \times 1620 = 4{,}976{,}640 \text{ bits}$$

By considering a CPLV recompression it is possible to generate N, P, Q, R bit/pixel for each luminance block and at S, T bit/pixel for each chrominance block, wherein the values are variable and according to the actual use of the algorithm of the present invention. In general it would be obtained:

$$[(N+P+Q+R) + (S+T)]*8*8 \text{ bits}$$

$$\underbrace{\qquad}_{\text{luma}} \quad \underbrace{\qquad}_{\text{chroma}}$$

Therefore each PAL frame will require a memory space of

$$[(N+P+Q+R) + (S+T)]*8*8 * 1620 \text{ bits}$$

the so obtained macroblock compression rate is variable in function of the variable quantization step for each block.

### Example of a MPEG decoder with CPLV recompression

Taking into account the fact that the limit of the memory reduction is the Bit Buffer, from the above relations it is possible to achieve any memory reduction value comprised between 12 and said Bit Buffer, the latter being defined by the MPEG2 standard, by admitting the recompression with the above calculated rate of the MPEG decompressed I and P frames.

Such a result is reached by recompressing the I and P pictures after the MPEG decompression and before they have been stored in the external memory. Afterwards, they will be decompressed upon being read from the external memory, as depicted in Figs. 6 and 7.

The recompression may be adapted to the 8*8 block outputted by the I-DCT and the motion compensation block, according to the above described adaptive CPLV scheme.

Thus the memory requisite becomes the following:

$$1,835,008 + 835,584 + \underline{[(N+P+Q+R) + (S+T)]*8*8 * 1620} + \underline{[(N+P+Q+R) + (S+T)]*8*8 * 1620}$$

bits

```
             |                    |
             |                    |
             |              P compressed buffer
      I compressed buffer
```

### Locations in the table of Figs. 10 and 13:

The Address Table mentioned in figures 10 and 13 contains as many locations as many 8*8 blocks of pixels that compose a frame, either of I or P kind.

Let I be a digital picture represented as a M rows and N columns matrix of pixels, and let I(y, x) the pixel at the row y and at the column x, represented as an integer by a D number of bits (binary digits).

Let the I picture be subdivided in BxC rectangular block (B rows and C columns). The maximum effectiveness of the compression is obtained if B and C are chosen among the integer dividers of M and N.

So there are {(M*N)/B*C}*6 blocks for each I or P frame.

The number of words that need to be stored in the table in the CPLV coder is {(M*N)/B*C}*6, being each word of A bits.

The number of words of the table of the CPLV decoder may be of {(M*N)/B*C}*6*2, being each word composed of A bits. The factor 2 allows to address portions of both I and P pictures, for motion compensation purposes.

### Claims

1.   Method to reduce the video memory requisite of a decoder of compressed video sequences comprising the steps of decompressing the coded pictures, storing the relative data in one or more buffers organized in the video memory, characterized in that it comprises

sub-sampling and recompressing the pictures after decompression and before storing them in respective buffers of the video memory, deriving from an L matrix representing the current picture to be compressed a sequence of sub-sampling $L_i$ and $H_i$ sub-matrices obtained by constructing two sub-matrices $L_1$ and $H_1$ of half the number of pixels of the starting matrix L, respectively by removing a progressively increased number of pixels and by interpolating the pixels of the $L_1$ matrix and successive subtraction of the corresponding pixels removed from the start matrix L and iterating this procedure using the sub-matrix $L_1$ as the starting matrix for deriving the successive matrix $L_i$ until a sub-matrix $L_n$ constituted by a single pixel is obtained,
quantizing with a zero-returning quantizer said $H_i$ sub-matrices calculated from the respective $L_i$ matrix with a $Q_i$ step greater than the $Q_{i-1}$ step used for the sub-matrix $H_{i-1}$;
effecting a binary tree coding of the values of said matrices using zero-tree markers for identifying a whole tree branch constituted only of zeroes,
effecting a Huffman coding of the most recurrent symbols leaving uncoded the least recurrent symbols, having them preceded by an Escape symbol, according to a spatial prediction technique with variable length coding (CPLV);
storing the data relative to the pictures in the form of sub-sampled, recompressed and CPLV coded blocks in respective video memory buffers;
decoding the data relative to said sub-sampled and recompressed blocks of pixels;
decompressing the decoded data of said blocks of pixels according to said spatial prediction technique with variable length coding (CPLV).

2. The method of claim 1 where said selected pixels of said matrices L and $L_i$ are either the even pixels of even rows and odd pixels of odd rows being "i" odd or the odd pixels of the odd rows on $L_i$ being "i" even, counting only the rows and columns relatives to pixels placed on $L_{i-1}$.

3. Video decoder suitable to be interfaced with a control bus and a bus of data of video picture elaboration to write and to read on respective memory buffers external to the "core" of the video decoder, comprising a first buffer of "first-in-first-out" (FIFO) kind for getting and writing compressed data in a respective first buffer (BIT BUFFER) for bit video of a memory (DRAM), a circuit for detecting the start code of a picture (Start Code Detector), synchronized by a control circuit (CONTROLLER), a bidirectional memory buffer (I/O UNIT) for screen visualization data (OSD), a block for variable length decoding (VLD) of the stream of input compressed data (BITSTREAM), a pipeline for the decompression (PIPELINE RLD, I_QUANT, I-DCT, PREDICTOR CONSTRUCTION) of data decoded by said block for variable length decoding (VLD), comprising a "run-length" decoding stage, a circuit suitable to realize an inverse quantization function, a circuit for elaborating the inverse cosine discrete transform and a network for generating a prediction value, a circuit block (MACROBLOCK TO RASTER SCAN) for converting a current B picture, immediately upstream of a visualization unit characterized in that it comprises moreover

a circuit of recompressing and coding (CPLV Encoder) according to a spatial prediction technique with variable length coding recompressing data relatives to pictures coding the relative data to write in respective video memory buffers;
a circuit of decoding and decompressing (CPLV Decoder) said data relatives to said recompressed pictures read from respective buffers of said memory generating a stream of data coded and decompressed relatives to said pictures.

4. The decoder of claim 3 wherein said circuit of recompressing and coding (CPLV Encoder) comprises

a frame storage memory (Frame Memory) storing the CPLV coded frame;
a work memory (Work Ram) for storing an uncoded macroblock;
a circuit (Get Macroblock) transferring sequentially the decompressed macroblocks produced by said decoder in the work memory;
a circuit sub-sampling matrices of values representing decomposition blocks of said macroblocks generating a plurality of extracted sub-matrices ($L_i$) and calculating a plurality of error matrices ($H_i$) of dimension continuously halved and quantizing the coefficients of said error matrices ($H_i$), coupled in cascade thereto and fedback to the work memory by a quantizer (Quantizer) having a variable step of quantization, comprising a circuit (Get Block) sequentially processing blocks of data of said macroblock and first multiplexing mean enabling/disabling circuits calculating the coefficients of said error matrices ($H_i$) for "i" even (Interp Even) and for "i" odd (Interp Odd) coupled by second multiplexing mean to said quantizer;
a circuit (Zero Tree) sequentially performing a binary tree coding and a zero tree marking on sub-sampled and quantized blocks of data stored in the work memory (Work Ram);
a Huffman coder, coupled in cascade to said circuit performing a binary tree coding and a zero tree marking (Zero Tree), coding the binary tree coded blocks of data and transferring the coded blocks in said frame storage memory (Frame Memory);
means for regulating the step of quantization of said quantizer, comprising a circuit (Compute Quant) calculating the best quantization step from data output by a circuit (Compute Length) calculating the bit length of each Huffman coded macroblock;
calculating and storing means of start addresses of the compressed macroblocks in the frame storage memory (Frame Memory), comprising a circuit (Compute Addr) calculating from the bit length of each Huffman coded macroblock, produced by said circuit (Compute Length) calculating the bit length, the start address of the successive macroblock in the frame storage memory (Frame Memory) and a memory (Address Table) storing the start addresses of all the macroblocks stored in the frame memory;
a data bus (External Bus) to which said Huffman coder, said circuit transferring macroblocks (Get Macroblock) and said frame storage memory (Frame Memory) are coupled.

5. The decoder of claim 3 wherein said circuit of decompressing and decoding (CPLV Decoder) of recompressed and coded values produced and stored by the recompressing and coding circuit of claim 4 comprises

a circuit of Huffman decoding, (Get Macroblock, Huffman Decoder, Huff Table) sequentially fed with compressed macroblocks read from the frame storage memory (Frame Memory) stored at the addresses indicated in said memory (Address Table) storing the start addresses and transferring the decoded data in the work memory (Work Ram);
a data bus (External Bus) to which said circuit of Huffman decoding and said frame storage memory (Frame Memory) are coupled;
a circuit for reconstructing a picture macroblock coupled in cascade thereto and fedback to the work memory by a dequantizer (Dequantizer), comprising a circuit (Get Block) sequentially processing coded blocks of decomposition of a macroblock of data stored in said work memory (Work Ram) constituting a compressed macroblock, a multiplexing mean enabling/disabling the blocks (Reconstr Even) reconstructing said coefficients of said extracted sub-matrices ($L_i$) for "i" even and (Reconstr Odd) reconstructing said coefficients of said extracted sub-matrices ($L_i$) for "i" odd, whose outputs are coupled by a multiplexing mean to said dequantizer.

Figure 1

Figure 2

Figure 3

Figure 4

Figure 5

# VIDEO DECODER
# BLOCK DIAGRAM

External DRAM Memory

AA8-AA0
RAS1-0
CAS
OE
WE

Memory Controller

**MEMORY DATA BUS**

DD63-0

To Bit Buffer | From Bit Buffer | OSD Data | Bitstream

**CPLV** encoder / decoder

Vectors

Macroblock to raster scan B-picture

Predictors | Pictures

Pictures

YC7-YC0

Compressed Data FIFO (1Kbits)

Start Code Detector

Memory I/O Unit

VLD Variable Length Decoder

Pipeline RLD,IQUANT, IDCT, Predictor Construction

Display Unit OSD SRC

PIXCLK

B/T

HSYNC

OSD

DSYNC

Controller

VSYNC

Q Tables | Pointers

**CONTROL BUS**

Microcontroller Interface

D7-D0   A5-A0   CS   R/W   WAITIRQ

Figure 6

EP 1 083 752 A1

Figure 7

Figure 8

Zero Tree → Huffman Code → Write Block → END

i=3 → i=i-1 → Hstep_odd → Lstep_odd → Hstep_even → Lstep_even → i=0

YES

NO

Figure 9

Figure 10

Figure 11

Figure 12

ADDRESS TABLE

HUFF TABLE

DEQUANTIZER

GET MACRO BLOCK

HUFFMAN DECODER

WORK RAM

GET BLOCK

DE MUX

RECONST. EVEN

RECONST. ODD

MUX

EXTERNAL BUS

FRAME MEMORY

Figure 13

EP 1 083 752 A1

## European Patent Office — EUROPEAN SEARCH REPORT

**Application Number**

EP 99 83 0561

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 778 709 A (SGS THOMSON MICROELECTRONICS) 11 June 1997 (1997-06-11) * page 4, line 21 - last line; figure 1 * * page 7, line 14 - line 17 * | 3 | H04N7/50 |
| Y | * page 3, line 22 - line 34 * --- | 1,2,4,5 | |
| Y | SALGADO L ET AL: "PYRAMIDAL ENCODING FOR PACKET VIDEO TRANSMISSION" SPIE VISUAL COMMUNICATIONS AND IMAGE PROCESSING,XX,XX, vol. 1360, 1990, page 1822-1833 XP000749398 * page 1827, paragraph 4 - page 1828, last line * --- | 1,2,4,5 | |
| A | BURT P J ET AL: "THE LAPLACIAN PYRAMID AS A COMPACT IMAGE CODE" IEEE TRANSACTIONS ON COMMUNICATIONS,US,IEEE INC. NEW YORK, vol. COM 31, no. 4, 1983, page 532-540 XP000570701 ISSN: 0090-6778 * page 533 * * page 534, column 1, last paragraph * * page 537, column 2, last paragraph - page 538, column 2, paragraph 2 * * figure 10 * --- | 1,2,4,5 | |
| A | US 5 598 214 A (FUJIMORI YASUHIRO ET AL) 28 January 1997 (1997-01-28) * figures 1,4 * ----- | 1-5 | |

**TECHNICAL FIELDS SEARCHED (Int.Cl.7)**

H04N

The present search report has been drawn up for all claims

| Place of search | Date of completion of the search | Examiner |
|---|---|---|
| BERLIN | 7 March 2000 | Raeymaekers, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

## ANNEX TO THE EUROPEAN SEARCH REPORT
## ON EUROPEAN PATENT APPLICATION NO.

EP 99 83 0561

This annex lists the patent family members relating to the patent documents cited in the above-mentioned European search report.
The members are as contained in the European Patent Office EDP file on
The European Patent Office is in no way liable for these particulars which are merely given for the purpose of information.

07-03-2000

| Patent document cited in search report | | Publication date | Patent family member(s) | | Publication date |
|---|---|---|---|---|---|
| EP 0778709 | A | 11-06-1997 | JP | 10004550 A | 06-01-1998 |
| | | | US | 5838597 A | 17-11-1998 |
| US 5598214 | A | 28-01-1997 | JP | 7147681 A | 06-06-1995 |
| | | | US | 5663764 A | 02-09-1997 |
| | | | US | 5859667 A | 12-01-1999 |

EPO FORM P0459

For more details about this annex : see Official Journal of the European Patent Office, No. 12/82